# EUROPEAN PATENT APPLICATION

(11) **EP 3 760 499 A1**
(43) Date of publication of application: **06.01.2021**
(21) Application number: 18907856.1
(22) Date of filing: 14.06.2018
(51) Int. Cl.: B60S 5/06, B66F 7/12

(54) **LIFT**

(30) Priority: 28.02.2018 CN 201810166829
(71) Applicant: NIO (ANHUI) HOLDING CO., LTD, Economic and Technological Development Zone Hefei Anhui 230601 (CN)
(72) Inventor: HAO, Zhanduo, Shanghai (CN); QI, Wengang, Shanghai (CN); YANG, Chao, Shanghai (CN); CHEN, Jiong, Shanghai (CN)
(74) Representative: Vossius & Partner Patentanwälte Rechtsanwälte mbB
(86) International application number: PCT/CN2018/091174
(87) International publication number: WO 2019/165724

(57) **Abstract**

Provided is an lift (100), comprising a main frame (10), a lifting device (20), a transverse moving device (30), a lateral moving device (40) and a vertical position adjusting device (50). The lifting device (20) is mounted in the main frame (10), and can be raised or lowered within the main frame (10) and fixed in place at an appropriate height. The transverse moving device (30) and the lateral moving device (40) are arranged on the lifting device (20). The vertical position adjusting device (50) is suitable for adjusting the relative vertical positions of the transverse moving device (30) and the lateral moving device (40) between a first position and a second position. In the first position, the transverse moving device (30) is higher than the lateral moving device (40), and in the second position, the lateral moving device (40) is higher than the transverse moving device (30).

## Description

### Technical Field

The invention relates to the technical field of mechanical transport, in particular, to a lift.

### Background Art

Battery swapping is a rapid energy supplement method for electric vehicles, and specifically refers to an energy supplement method in which a traction batteries of an electric vehicle is removed through a battery swap device and immediately replaced by another group of traction batteries. A battery swap station is a place for realizing replacement of traction batteries of electric vehicles.

A series of battery transport processes are needed between a vehicle with batteries to be swapped and a battery storage (or battery rack). The transport in the prior art is realized through a stacker, a forklift and the like. Besides a transport device itself, a vehicle body occupies a large amount of space.

However, for use in the battery swap station, there are requirements in terms of compactness, safety and the like, but existing transport equipment and methods cannot meet the requirements.

### Summary of the Invention

An object of the invention is to provide an improved lift.

In order to achieve the foregoing object, an aspect of the invention provides an lift, which comprises:
a main frame; and
a lifting device that is mounted in the main frame and can be raised or lowered within the main frame and fixed in place at an appropriate height;
a transverse moving device and a lateral moving device arranged on the lifting device; and
a vertical position adjusting device suitable for adjusting the relative vertical positions of the transverse moving device and the lateral moving device between a first position and a second position, in the first position, the transverse moving device being higher than the lateral moving device, and in the second position, the lateral moving device being higher than the transverse moving device.

Optionally, in the lift mentioned previously, the lifting device is powered by a rigid chain.

Optionally, in the lift mentioned previously, the lifting device is guided in a vertical lifting direction thereof by a vertical guide rail or a scissor fork.

Optionally, in the lift mentioned previously, one of the transverse moving device and the lateral moving device is a conveyor belt, and the other one thereof is a roller set.

Optionally, in the lift mentioned previously, the vertical position adjusting device is adapted to adjust the height of the conveyor belt and/or the roller set on the lifting device.

Optionally, in the lift mentioned previously, the vertical position adjusting device is an electric motor or a pressure cylinder.

Optionally, in the lift mentioned previously, a transverse limiting device is further provided on the lifting device and is a limiting guide bar.

Optionally, in the lift mentioned previously, an lead angle is provided at the portion, close to a battery lead-in position, of the limiting guide bar.

Optionally, in the lift mentioned previously, a lateral limiting device is further provided on the lifting device and is a overturn limiting block.

Optionally, in the lift mentioned previously, both sides of the overturn limiting block are provided with overturn driving air cylinders.

### Brief Description of the Drawings

The disclosure of the invention will be more apparent with reference to the accompanying drawings. It should be appreciated that these accompanying drawings are merely used for the purpose of description, and are not intended to limit the scope of protection of the invention. In the figures:
Fig. 1 is an overall schematic view of an lift according to an embodiment of the invention;
Fig. 2 is a schematic view of a lateral moving device and a transverse moving device on an lifting device;
Fig. 3 is a partial schematic view of the lifting device with the transverse moving device in a low position;
Fig. 4 is a partial schematic view of the lifting device with the transverse moving device in a high position;
Fig. 5 is a schematic view of the transverse limiting device;
Fig. 6 is a schematic view of the lateral limiting device; and
Fig. 7 is a schematic view of the lowest lifting stroke of the lift of Fig. 1.

### Detailed Description of Embodiments

Specific embodiments of the invention are described below in detail with reference to the accompanying drawings. In the accompanying drawings, the same reference numerals denote the same or corresponding technical features.

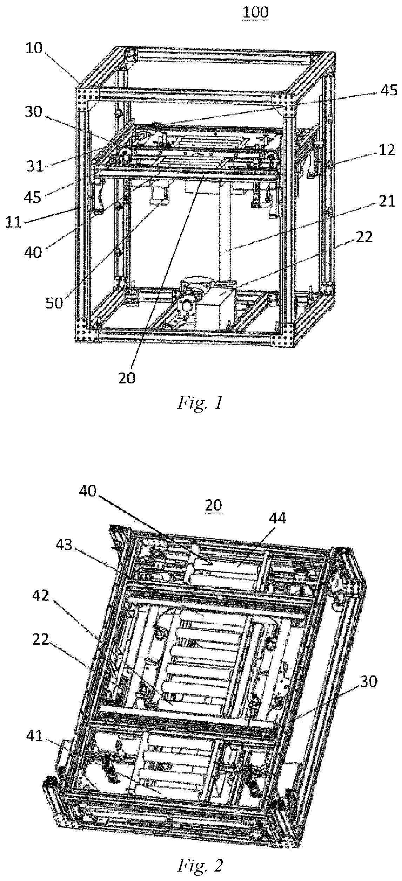

Fig. 1 is an overall schematic view of an lift according to an embodiment of the invention.

As shown in the drawing, the lift 100 in the illustrated embodiment may comprise a main frame 10, an lifting device 20, a transverse moving device 30, a lateral moving device 40, a vertical position adjusting device 50, etc. The compact lift is suitable for carrying and transporting a vehicle traction battery. For example, the vehicle traction battery may be a block battery adapted to be mounted under a chassis of an electric vehicle.

The main frame 10 in the illustrated embodiment may be made of any suitable material. For example, the materials include, but are not limited to, metal, alloy, and suitable composite materials. The main frame 10 may be assembled from different rods. Although the rods in the illustrated embodiment are assembled into a cuboid frame, they may be assembled into different configurations to meet site and space requirements according to specific circumstances. One or more sides of the main frame 10 are accessible, for example, to allow the battery to be docked from outside the respective sides of the main frame 10 to the internal lifting device 20, or from the internal lifting device 20 to an external battery swap RGV (Rail Guided Vehicle) or a battery storage.

The lifting device 20 in the illustrated embodiment is mounted within the main frame 10, and can be raised or lowered within the main frame 10 and fixed in place at an appropriate height. In order to simplify the structure and provide a longer lifting stroke, the lifting device 20 may be powered by a rigid chain 21. The rigid chain 21 itself may be driven by an electric motor 22 or the like. Hydraulic cylinders or air cylinders or the like may also be used to provide the lifting power in alternative embodiments, but they would require additional space heights corresponding to their strokes. In an alternative embodiment, the lifting may also be performed with an electric motor traction suspension rope or the like on the premise that the stability is ensured.

In the main frame of Fig. 1, each column 11 can be used as a vertical sliding guide rail for the lifting device 20 to guide its lifting in the vertical direction. In addition to the vertical sliding guide rails, the lifting device may also be guided in its vertical lifting direction by a scissor fork (not shown), which may also provide support on both sides. The scissor fork may be disposed below the lifting device 20. The grades of the scissor fork for supporting may depend on different lifting strokes.

The fixing of the lifting device 20 at different height positions may be realized by stopping the actions of the electric motor, the air cylinders and the like. Alternatively, in an alternative embodiment, the lifting device 20 may also be held to the vertical guide rails by suitable holding devices. As shown in the figure, positioning devices 12 may be provided on the column 11, and each positioning device corresponds to a different battery storage layer of the battery storage and is used for determining the stop position of the lifting device 20 to facilitate the docking of the battery with the battery storage of each layer.

Fig. 2 is a schematic view of the lateral moving device and the transverse moving device on the lifting device.

It can be seen that the transverse moving device 30 is mounted on the lifting device 20. In this embodiment, the transverse moving device 30 may be a conveyor belt. After the battery (not shown) to be transferred falls on the conveyor belt, the transverse displacement of the battery can be realized by driving and controlling the driving direction of the conveyor belt by the electric motor. There are two conveyor belts in the illustrated example each for carrying batteries at two ends thereof. In an alternative embodiment, other numbers of conveyor belts may be provided on the premise of sufficient space for more stable and efficient transverse movement and transport of batteries.

It can be seen that lateral moving device 40 is mounted on the lifting device 20. In this embodiment, the lateral moving device 40 may be a roller set. The front, middle and rear sets of rollers are shown together in the figure and may include a plurality of driving rollers and driven rollers, wherein the driving rollers may provide power and the driven rollers may provide support. The rollers close to the outer edge in each set may be provided as the driving rollers, such as rollers 41, 42, 43, 44 in the figure, and the remaining rollers may be provided as the driven rollers (i.e. the lateral moving device 40 in the figure includes four driving rollers and eight driven rollers).

Other sets of rollers may be provided in an alternative embodiment. and the rollers close to the outer edge in each set may also be provided as the driving rollers and the remaining rollers are provided as driven rollers as previously described. The number of the driving rollers mainly depends on the bearing capability and driving force of the rollers, the weight of the batteries, the acceleration time and acceleration required by the action pace, and the friction coefficient between the batteries and the rollers.

In particular, the rollers (e.g., rollers 41 and 44 in Fig. 2) responsible for docking the batteries at the front and rear side edges of the lateral moving device 40 need to be provided as the driving rollers to provide an initial lateral moving force for the batteries just docked from the battery swap RGV or the battery storage, or to provide a final lateral moving force to transfer the batteries to the battery swap RGV or the battery storage.

Although it is illustrated with the example in which the transverse moving device is the conveyor belt and the lateral moving device is the roller set, in other alternative embodiments, the transverse moving device may be provided as a roller set and the lateral moving device as a conveyor belt. Even further, it is also possible to provide both the transverse moving device and the lateral moving device as roller sets, or both the transverse moving device and the lateral moving device as conveyor belts. Other conveyor devices commonly used in the art may also be contemplated in further embodiments.

Since both the conveyor belts of the transverse moving device and the roller sets of the lateral moving device of the illustrated embodiment employ the way that the batteries are driven to advance by a friction force, the two devices cannot act on the batteries simultaneously, and the two motions need to be separated by a vertical position adjusting device.

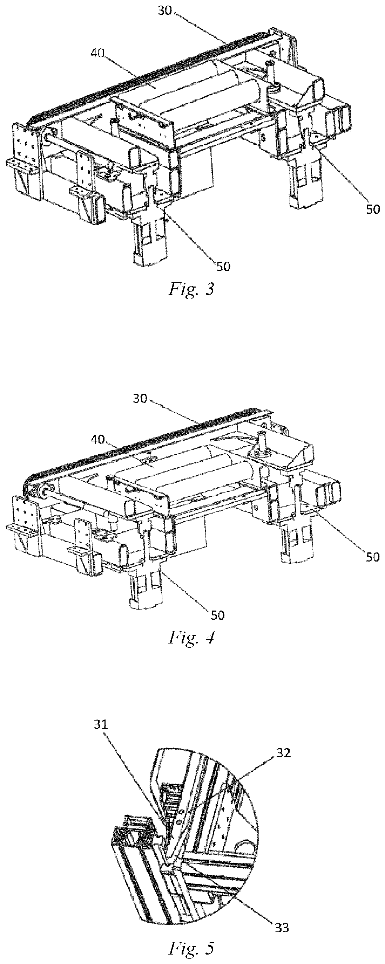

In an alternative embodiment, the vertical position adjusting device may be adapted to adjust the relative vertical positions of the transverse moving device 30 and the lateral moving device 40 between the first position and the second position. In the first position, the transverse moving device is higher than the lateral moving device (as shown in Fig. 4), and in the second position, the lateral moving device is higher than the transverse moving device (as shown in Fig. 3). The vertical position adjusting device may be an electric motor or a pressure cylinder or the like and is adapted to adjust the height of the transverse moving device and/or the lateral moving device on the lifting device 20. The pressure cylinder may be hydraulic or pneumatic.

The vertical position adjusting device herein is arranged at the transverse moving device to exemplify the changes in the vertical position of the transverse moving device.

Figs. 3 and 4 are partial schematic views of the lifting device, with the transverse moving device in Fig. 3 at a low position and the transverse moving device in Fig. 4 at a high position.

A portion of the transverse moving device 30 and a portion of the lateral moving device 40 are shown in the partial schematic views. According to the illustration, the lateral moving device 40 is fixed to a frame of the lifting device 20 and cannot be moved up and down relative to the lifting device 20; the bottom of the transverse moving device may be provided with a vertical position adjusting device 50 for controlling their vertical positions.

The vertical position adjusting device 50 is illustrated as two air cylinders in the illustrated embodiment, and has the advantages of stable and reliable operation, low noise, etc. When the batteries need to be moved transversely, the cylinders can be jacked to cause the conveyor belts to be in contact with the batteries and the conveyor belts can drive the batteries to move transversely; when the batteries need to be moved laterally, the cylinders can be lowered to lower the lateral moving device, the batteries fall onto the rollers of the lateral moving device, and the batteries can be moved laterally by driving the rollers.

In Fig. 3, the transverse moving device 30 has been lowered to the lowest point in the lifting device 20, in which case it is proper to use the roller sets to drive the batteries to advance in the lateral direction. In Fig. 4, the transverse moving device has been raised to the highest point in the lifting device 20, in which case it is proper to use the conveyor belts to bring the batteries to advance in the transverse direction.

In an alternative embodiment, the vertical position adjusting device may be disposed at the lateral moving device 40. In a further embodiment, a vertical position adjusting device may also be disposed at each of the transverse moving device and the lateral moving device in order to improve the adjusting efficiency.

It will be apparent from the above description of the transverse moving device and the lateral moving device that the batteries carried by the lift of the invention are suitable for having a length and a width matched with those of the transverse moving device and the lateral moving device so as to be carried on the transverse moving device and the lateral moving device.

In order to ensure the posture of the batteries to be carried and transferred in the lift 100 and prevent the batteries from slipping off, the transverse limiting device and the lateral limiting device such as, but not limited to the transverse limiting guide bar and lateral limiting block shown in the figures, may be provided on the lift 20.

As shown in Fig. 1, it can be seen that the transverse limiting device are also disposed on the lifting device 20, and is exemplified as limiting guide bars 31. Two limiting guide bars 31 are shown in Fig. 1 in total, configured to coincide with the width direction of the battery to be carried, and a certain allowance may be reserved for the batteries to enter. Further, a lead angle may be provided at the portion, close to a battery lead-in position, on the limiting guide bar 31 so as to guide the entrance of the battery. Fig. 5 is a schematic view of the transverse limiting device, showing a first lead angle 32 oriented vertically and a second lead angle 33 oriented laterally.

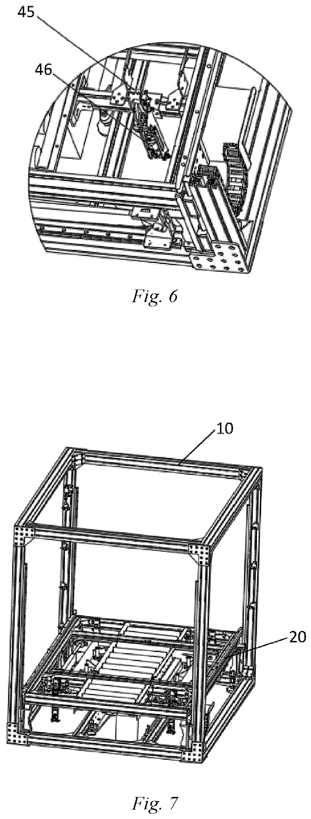

The lateral limiting device on the lifting device 20 is shown in Fig. 6 and is illustrated as a limiting block. Specifically, the limiting block may be an overturn limiting block 45 driven by an overturn driving air cylinder 46. In an alternative embodiment, cylinders are arranged on both sides of the overturn limiting block 45 so that a battery can enter and be limited on both sides of the limiting block. The battery is allowed to enter or leave the lift when the limiting block 45 is turned over. A limiting function is achieved when the limiting block 45 is turned up.

Fig. 7 is a schematic view of the lowest lifting stroke of the lift of Fig. 1. The highest lifting stroke of the lift is shown in Fig. 1. It can be seen in connection with Figs. 1 and 7 that due to the use of the rigid chain, the lifting device has a considerable extreme position in the lift without taking up too much space in the travel of the lift, which makes the design of the lift rather compact and particularly suitable for carrying and transferring batteries in urban battery swap stations.

It can be appreciated from the above description that related embodiments of the invention provide the compact three-way transport lift capable of cooperating with the battery storage and the battery swap RGV to achieve three-way transport of batteries in a limited area (within the main frame slightly larger than the projected area of one battery), including lifting, transverse movement, lateral movement, etc., which can be accomplished by the battery swap RGV, the lift, and the battery storage together. Serving as a transport device between the battery swap RGV and the battery storage, the lift can complete the actions of transverse movement, lateral movement, lifting and the like of batteries. In a vehicle battery swap/energy storage station, the battery swap RGV is used to carry and transfer new and old batteries between an automobile with a battery to be swapped and the lift, and the lift is used to transfer new and old batteries between the battery swap RGV and the battery storage. The battery storage is used to store batteries, and optionally charges the stored batteries, in the vehicle battery swap/energy storage station.

In the illustrated application, the lift as a whole may communicate with a master control unit of the vehicle battery swap/energy storage station in a wired or wireless manner, which may include, but is not limited to, CAN communication, Ethernet communication, WIFI communication and the like, thereby completing the vehicle battery swap operation in cooperation with the battery swap RGV and the battery storage under the coordination of the master control unit.

It will be appreciated that although the lift is described herein in connection with the vehicle battery swap/energy storage station, the lift of the application may also be used for the transport of other objects similar to vehicle traction batteries in shape.

The technical scope of the invention is not merely limited to the above description. Those skilled in the art can make various changes and modifications to the above embodiments without departing from the technical idea of the invention, and these changes and modifications shall fall within the scope of the invention.

## Claims

1. An lift, **characterized by** comprising:
a main frame; and
a lifting device that is mounted in the main frame and can be raised or lowered within the main frame and fixed in place at an appropriate height;
a transverse moving device and a lateral moving device arranged on the lifting device; and
a vertical position adjusting device suitable for adjusting the relative vertical positions of the transverse moving device and the lateral moving device between a first position and a second position, in the first position, the transverse moving device being higher than the lateral moving device, and in the second position, the lateral moving device being higher than the transverse moving device.

2. The lift of claim 1, **characterized in that** the lifting device is powered by a rigid chain.

3. The lift of claim 2, **characterized in that** the lifting device is guided in a vertical lifting direction thereof by a vertical guide rail or a scissor fork.

4. The lift of claim 1, **characterized in that** one of the transverse moving device and the lateral moving device is a conveyor belt, and the other one thereof is a roller set.

5. The lift of claim 4, **characterized in that** the vertical position adjusting device is adapted to adjust the height of the conveyor belt and/or the roller set on the lifting device.

6. The lift of claim 1, **characterized in that** the vertical position adjusting device is an electric motor or a pressure cylinder.

7. The lift of claim 1, **characterized in that** a transverse limiting device is further provided on the lifting device and is a limiting guide bar.

8. The lift of claim 7, **characterized in that** an lead angle is provided at the portion, close to a battery lead-in position, of the limiting guide bar.

9. The lift of claim 1, **characterized in that** a lateral limiting device is further provided on the lifting device and is a overturn limiting block.

10. The lift of claim 9, **characterized in that** both sides of the overturn limiting block are provided with overturn driving air cylinders.
